# EUROPEAN PATENT APPLICATION

(11) **EP 4 197 751 A1**
(43) Date of publication of application: **21.06.2023**
(21) Application number: 22213146.8
(22) Date of filing: 13.12.2022
(51) Int. Cl.: B29C 65/02, B29C 65/74, B65B 51/30, B65B 9/20, B29C 65/36, B65B 51/22, B29K 23/00, B29K 705/02, B29L 9/00

(54) **PACKAGING ASSEMBLY FOR FORMING AND SEALING A PLURALITY OF PACKS CONTAINING A POURABLE PRODUCT**

(30) Priority: 17.12.2021 EP 21215467
(71) Applicant: Tetra Laval Holdings & Finance S.A., 1009 Pully (CH)
(72) Inventor: PIFERI, Andrea, 41123 Modena (IT); BERNARDI, Marino, 41123 Modena (IT)
(74) Representative: Tetra Pak - Patent Attorneys SE

(57) **Abstract**

There is described a packaging assembly (1) for forming and sealing a plurality of packages (2) containing a pourable product starting from a tube (3) of packaging material, the packaging assembly (1) comprises: a longitudinal axis (A) along which the tube (3) is fed, in use; a sealing device (11) for repeatedly sealing the tube (3) at successive cross-sections thereof and having a sealing member (12) and a countersealing member (13) arranged at opposite sides of the longitudinal axis (A); at least a pair of arms (14) arranged at opposite sides of the longitudinal axis (A), movable towards and away from one another along a first direction (X) transversal to the longitudinal axis (A), and including a first arm (14a) carrying the sealing member (12) and a second arm (14b) carrying the countersealing member (13); the packaging assembly (1) further comprises a dispensing device (15) for feeding a cooling and/or lubricant fluid at least towards the sealing member (12); the dispensing device (15) is carried by the second arm (14b).

## Description

### TECHNICAL FIELD

The present invention relates to a packaging assembly for forming and sealing a plurality of packs containing a pourable product, preferably a pourable food product.

In particular, the present invention relates to a packaging assembly configured to fill, form, seal, cut and fold packages containing the pourable product starting from a tube of packaging material.

### BACKGROUND ART

As it is generally known, many pourable food products, such as fruit juice, UHT (ultra-high temperature-treated) milk, wine, tomato sauce, etc., are sold in packages made of sterilized packaging material.

A typical example is the parallelepiped-shaped package for pourable food products known as Tetra Brik Aseptic (registered trademark), which is made by folding and sealing a laminated web of packaging material. The packaging material has a multilayer structure comprising a base layer, e.g. made of paper, covered on both sides with layers of heat-seal plastic material, e.g. polyethylene.

In the case of aseptic packages for long-storage products, such as UHT milk, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Such packages are usually produced in fully automatic packaging assemblies, in which a continuous tube is formed starting from a web of packaging material initially wound in a reel and fed through a plurality of unwinding rollers of such packaging assembly. The web of packaging material is sterilized in the packaging assembly, e.g. by applying a chemical sterilizing agent, such as hydrogen peroxide solution, which, once sterilization is completed, is removed from the surfaces of the packaging material, e.g. evaporated by heating. The web so sterilized is then maintained in a closed, sterile environment, and, advanced by the aforementioned unwinding rollers, is folded and sealed longitudinally to form the tube by means of a known web folding device.

The tube is fed continuously along a first direction, normally a straight vertical direction, is filled with the sterilized food product from above and is formed, sealed and subsequently cut along equally spaced transversal cross-sections extending along a second direction, normally a direction orthogonal to the first direction. So-called pillow packs are obtained thereby, which have a longitudinal sealing band, a top transversal sealing band and a bottom transversal sealing band. The pillow packs are then cut at the cross-sections to be separated from one another and directed to a folding device of the packaging assembly for the final folding thereof.

In order to perform the forming and sealing operations, the known packaging assemblies comprise a forming device configured to form the tube, so as to imprint an external shape to the tube, such external shape corresponding to the desired shape of the package, and a sealing device configured to seal the tube at equally spaced cross-sections orthogonal to the tube advancement direction.

A packaging assembly of the above type is known from WO-A-2007114752. Such packaging assembly comprises a pair of alternately movable forming and sealing jaws which are controllable with a reciprocating movement in the first direction and in a third direction orthogonal to the first direction and second direction to interact with the tube at successive portions thereof.

In particular, the jaws are guided and driven by driving and guiding rods to which the tube runs parallel.

The forming device comprises at least one pair of forming members, typically in the form of shells, arranged at opposite lateral sides of the tube of packaging material, facing one another and cyclically surrounding, in use, successive portions of the tube to sequentially impart or transfer the predetermined external shape to these portions.

For each jaw, the sealing device is arranged operatively downstream of the forming device, along the first direction and with respect to an advancing direction of the tube, and comprises at least one pair of sealing elements, typically in the form of clamps, arranged at opposite lateral sides of the tube of packaging material facing one another and cyclically gripping between them, in use, successive equally spaced transversal cross-sections of the tube to sequentially seal the tube at these transversal cross-sections, thereby forming the pillow packs.

In detail, the sealing device comprises two sealing elements: a sealing member carrying heating means and a countersealing member defining an abutment surface for the heating means to abut against.

In greater detail, each tube portion gripped between the sealing elements is heat sealed by the heating means, which locally melt, in use, the heat-sealable plastic material in the gripped region.

Packaging material in which the layer of barrier material is defined by a sheet of electrically conductive material, e.g. a sheet of aluminum, is normally heat sealed by a well-known induction heat-seal process, in which, when the tube is gripped between the sealing member and the countersealing member, electric current is induced in the sheet of aluminum to locally heat the sheet of aluminum, thereby locally melting the heat-sealable plastic material.

More specifically, in this last case, the heating means substantially comprise an inductor, which is carried by the sealing member, is supplied by a highfrequency current generator, and is substantially defined by a coil comprising one or more inducting bars made of electrically conductive material, extending parallel to the second direction, and which interact with and induce an electric current in the packaging material to heat the packaging material to the required heat-seal temperature.

The countersealing member comprises two pressure elements, preferably two pressure pads made of elastomeric material, having respective front contact surfaces defining the above-mentioned abutment surface.

Once the heat-seal operation is completed, a cutting member carried by one of the two sealing elements, normally the countersealing member, is activated, thereby interacting with the tube of packaging material to cut the tube along the respective previously created sealing band, and so separating (cutting) a pillow pack from the bottom end of the tube of packaging material. Typically, the cutting member is extracted from a slot arranged between the two pressure pads to engage a recess of the sealing member.

Once the cutting operation is complete, the sealing member and the countersealing member are moved away from one another to be ready to grip another subsequent portion of the tube.

It is known in the field the need for lubricating the forming device. In particular, it is known that the forming shells produce a certain friction while cooperating with the tube, due to their cyclical movement towards and away from the tube.

It is also known in the field the need for cooling the sealing device. In particular, it is known that the heating means of the sealing member locally heat the packaging material. After some cycles and in certain operative conditions, the heating could overcome a certain threshold, thereby causing the sealing member to overheat and inadvertently stick to the external plastic layer of the packaging material.

According to a known solution, the packaging assemblies comprise a fluid dispensing device for feeding a lubricating and cooling fluid, usually water, to the forming device and to the sealing device.

In particular, an arc-shaped duct is known to be fixedly arranged around the tube, so as to at least partially surround the tube, in a fixed position upstream of the forming and sealing jaws, and configured for continuously flushing water onto the external surface of the tube.

In detail, the duct has a plurality of holes through which water is flushed on the tube.

Due to gravity, the flushed water also laps the forming shells and the sealing member when these latter interact with the tube, thereby determining a certain lubrication and cooling.

Although the known packaging assemblies are functionally valid, the Applicant has observed that they are prone to further improvements, in particular as per the reduction of the water consumption, the effectiveness of lubrication and cooling, the extension of the lifespan of the components, and the structural improvement of the finished package.

### DISCLOSURE OF INVENTION

It is therefore an object of the present invention to provide a packaging assembly which is designed to meet at least one of the above-mentioned needs in a straightforward and low-cost manner.

This object is achieved by a packaging assembly as claimed in claim 1.

### BRIEF DESCRIPTION OF THE DRAWINGS

A non-limiting embodiment of the present invention will be described by way of example with reference to the accompanying drawings, in which:
Figure 1 is a perspective view, with parts removed for clarity, of a packaging assembly for producing packages filled with pourable product according to the present invention;
Figure 2 is a larger-scale perspective view, with parts removed for clarity, of a forming and sealing apparatus of the packaging assembly of Figure 1;
Figure 3 is a larger-scale perspective view, with parts removed for clarity, of a detail of the apparatus of Figure 2;
Figure 4 is a schematic side view, with parts removed for clarity, of the apparatus of Figure 2; and
Figures 5 and 6 are larger-scale details of a component of the apparatus of Figure 2, during respective distinct operative conditions.

### BEST MODE FOR CARRYING OUT THE INVENTION

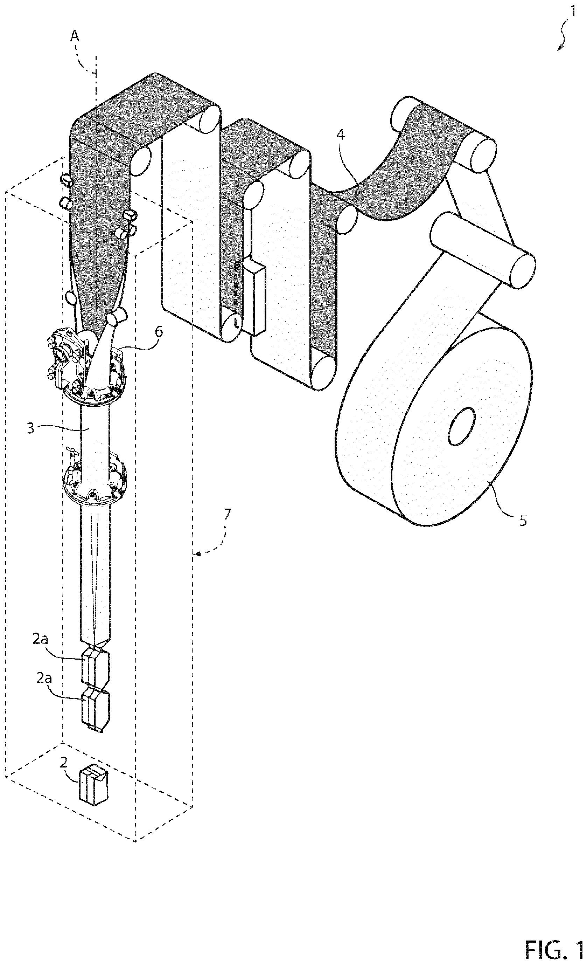

With reference to Figure 1, number 1 indicates as a whole a packaging assembly for producing a plurality of sealed packages 2 containing a pourable product, preferably a pourable food product such as pasteurized or UHT milk, water, fruit juice, wine, peas, beans, etc. starting from a tube 3 of packaging material.

In detail, packaging assembly 1 is configured to form tube 3 starting from a web-like sheet 4 of packaging material, which is unwound off a reel 5 and fed along a forming path.

In greater detail, packaging assembly 1 is configured to form and seal a plurality of pillow packs 2a containing the pourable product starting from tube 3 and then to fold pillow packs 2a for obtaining the aforementioned formed, sealed and folded packages 2 containing the pourable product.

Preferably, the packaging material has a multilayer structure (not shown), and comprises a layer of fibrous material, e.g. paper, covered on both sides with respective layers of heat-seal plastic material, e.g. polyethylene.

In the case of aseptic packages 2 for long-storage products, such as UHT milk, the packaging material also comprises a layer of gas-and-light barrier material, e.g. aluminum foil or ethylene vinyl alcohol (EVOH) film, which is superimposed on a layer of heat-seal plastic material, and is in turn covered with another layer of heat-seal plastic material, the latter forming the inner face of package 2 eventually contacting the pourable product.

Conveniently, after being unwound off reel 5 and before being formed into tube 3, sheet 4 of packaging material is sterilized, e.g. by applying a chemical sterilizing agent, such as hydrogen peroxide solution, which, once sterilization is completed, is removed from the surfaces of the packaging material, e.g. evaporated by heating.

Then, packaging assembly 1 is configured to perform, sequentially, the following operations:
- longitudinally folding sheet 4 of packaging material to obtain tube 3 by means of folding means 6, known per se and not described in detail, and longitudinally sealing tube 3 to form a longitudinal sealing band;
- filling tube 3 (from above) with the pourable product;
- forming tube 3 at successive portions thereof to impart (give) a predetermined external shape to such portions;
- transversally sealing tube 3 at equally spaced cross sections, so that pillow packs 2a are obtained;
- cutting tube 3 at the above-mentioned cross sections to separate pillow packs 2a from one another; and
- folding pillow packs 2a to obtain fully folded packages 2.

Conveniently, packaging assembly 1 comprise an isolation chamber 7 defining an inner environment, in particular an inner sterile environment containing a sterile gas and separated from an outer environment. Advantageously, the operations of longitudinally sealing tube 3 and forming tube 3 are carried out within the isolation chamber 7.

Packaging assembly 1 comprises a forming and sealing apparatus 8 for forming and sealing pillow packs 2a and having a longitudinal axis A along which tube 3 is fed, in use.

That is, in use, tube 3 is fed continuously along a first direction Z parallel to axis A, in particular a straight vertical direction.

While being fed along axis A, tube 3 is filled from above with the pourable product, in a manner known and not described in detail.

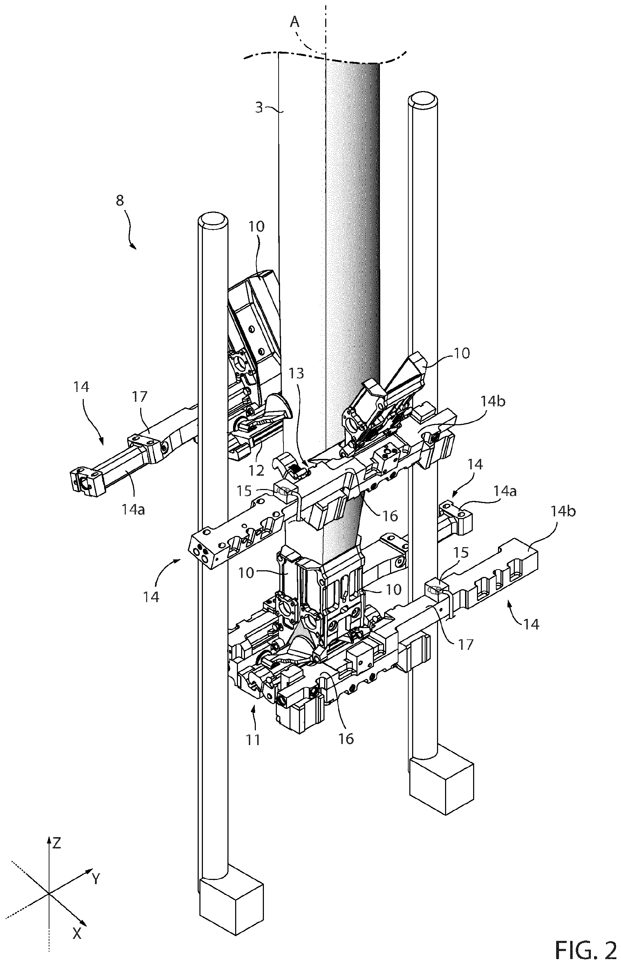

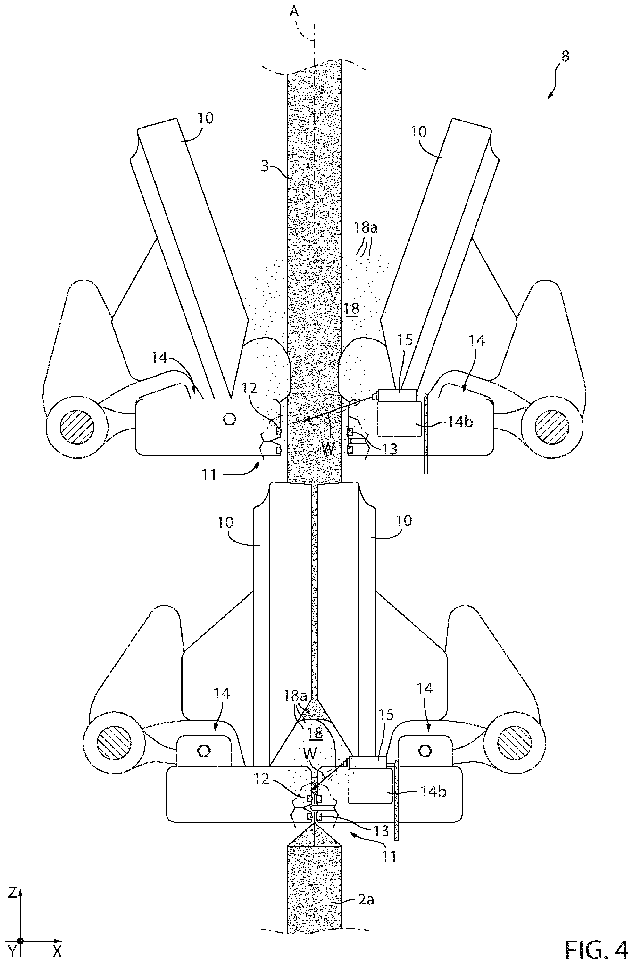

In order to perform the operation of forming tube 3, apparatus 8 comprises at least one pair of forming shells 10 arranged at opposite sides of axis A, i.e. at opposite sides of tube 3, facing one another. According to a known manner, and as visible in Figure 2 and schematically shown in Figure 4, forming shells 10 are repeatedly movable towards and away from one another to cyclically cooperate with one another for surrounding successive portions of tube 3, thereby sequentially imparting a predetermined external shape to tube 3.

In particular, forming shells 10 are movable towards one another along a second direction X transversal, more in particular orthogonal, to first direction Z and axis A.

Furthermore, forming shells 10 are movable in a reciprocate manner along the first direction Z so as to follow the advancement of tube 3 along axis A.

Conveniently, apparatus 8 comprises two pairs of forming shells 10, each pair being movable in the aforementioned reciprocate manner.

More precisely, the speed of each pair of forming shells 10 along first direction Z matches, in use, the advancing speed of tube 3 along axis A, so that the forming shells 10 of each pair can surround the respective portion, cyclically.

In detail, tube 3 is fed along axis A downwards. Hence, forming shells 10 are moved downwards to follow and surround a tube portion.

Then, once the forming is completed, forming shells 10 detach from such tube portion and are moved upwards to follow a subsequent tube portion and repeat the forming operation thereon.

The two pairs of forming shells 10 perform the above operation in an alternate manner, so forming successive portions of tube 3.

In order to perform the sealing operation, apparatus 8 comprises at least one sealing device 11 configured to repeatedly seal tube 3 at equally spaced cross-sections thereof orthogonal to the tube advancement direction, i.e. orthogonal to axis A and first direction Z.

In detail, as schematically shown in Figures 4, 5 and 6, sealing device 11 has a sealing member 12 and a countersealing member 13 arranged at opposite sides of axis A, in particular at opposite sides of tube 3, facing one another.

According to a known manner, sealing member 12 and countersealing member 13 are repeatedly movable towards and away from one another (Figure 4) to cyclically cooperate with one another thereby clamping tube 3 in a jaw-like manner at said cross-sections for sealing tube 3 and defining transversal sealing bands which extend along a third direction Y orthogonal to both first direction Z and second direction X.

Conveniently, apparatus 8 comprises two sealing devices 11, each one of which is integral in motion along axis A (and first direction Z) with a respective pair of forming shells 10.

In detail, for each sealing device 11 and for each pair of forming shells 10, sealing member 12 is integral with one forming shell 10 and preferably arranged below the latter, and countersealing member 13 is integral with the other forming shell 10 and preferably arranged below the latter.

To this end, apparatus 8 comprises at least one, in particular two pairs of arms 14 arranged at opposite sides of axis A, in particular arranged at opposite sides of tube 3, each pair of arms carrying one pair of forming shells 10 and one sealing device 11.

For each pair of arms, arms 14 are:
- movable towards and away from one another along a direction transversal to axis A, in particular along second direction X; and
- movable in a reciprocate manner along first direction Z, so as to follow the advancement of tube 3 along axis A.

Such kind of reciprocating and cyclical movement of arms 14, and of forming shells 10, sealing member 12 and countersealing member 13 is well-known and described, for example, in WO-A-2007114752.

In this way, arms 14 of each pair control and determine the movement of the respective pair of forming shells 10 and the movement of the respective sealing device 11.

In practice, arms 14 define alternately movable forming and sealing jaws which are controllable with a reciprocating movement in first direction Z and in second direction X to interact with tube 3 at successive portions thereof.

For the sake of brevity, reference will be made in the following to a single pair of arms 14 carrying one pair of forming shells 10 and one sealing device 11. However, the functional and structural features of such pair of arms 14 are equally applicable to the other pair of arms 14 of apparatus 8.

The pair of arms 14 include:
- a first arm 14a carrying sealing member 12 and one forming shell 10; and
- a second arm 14b carrying countersealing member 13 and one forming shell 10.

First arm 14a and second arm 14b are arranged so as to substantially extend along third direction Y.

In light of the above, sealing member 12 and countersealing member 13 are configured to cyclically cooperate with one another in a jaw-like manner for sealing tube 3 by means of the movement of arms 14.

Preferably, sealing member 12 comprises heating means for locally heating the external layer of heat-seal plastic material.

In detail, each tube portion gripped between sealing member 12 and countersealing member 13 is heat sealed by the heating means, which locally melt, in use, the heat-sealable plastic material in the gripped region.

In one embodiment, sealing member 12 comprises a known inductor which induces, in use, a current in the barrier layer, in case the barrier layer is made of an electrically conductive material. Due to the induced current, the barrier layer heats up, thereby heating the plastic material locally.

In another embodiment, sealing member 12 comprises a known sonotrode configured for generating heat by means of ultrasonic vibrations.

Preferably, in case sealing member 12 comprises an inductor, countersealing member 13 comprises elastomeric elements facing sealing member 12 and defining an abutment surface for the latter.

In light of the above, sealing member 12 locally heats the plastic material of the external layer. Therefore, there is a need for cooling sealing member 12.

To this end, packaging assembly 1, and particularly apparatus 8, further comprises a dispensing device 15 for feeding a cooling and/or lubricant fluid at least towards sealing member 12.

Preferably, the fluid is water.

The dispensing device 15 is carried by second arm 14b.

In particular, the dispensing device comprises a nozzle 15 for spraying the fluid towards sealing member 12.

As visible in Figures 2, 3, 4, 5 and 6, nozzle 15 is fixedly mounted on second arm 14b.

In detail, nozzle 15 is integral in motion with second arm 14b.

In light of the above, nozzle 15 is integral with the movement of second arm 14b towards and away from first arm 14a.

Moreover, nozzle 15 is integral with the reciprocating movement of second arm 14b.

Advantageously, nozzle 15 is carried by, preferably fixedly mounted on, second arm 14b for spraying the fluid towards first arm 14a along a direction transversal to axis A.

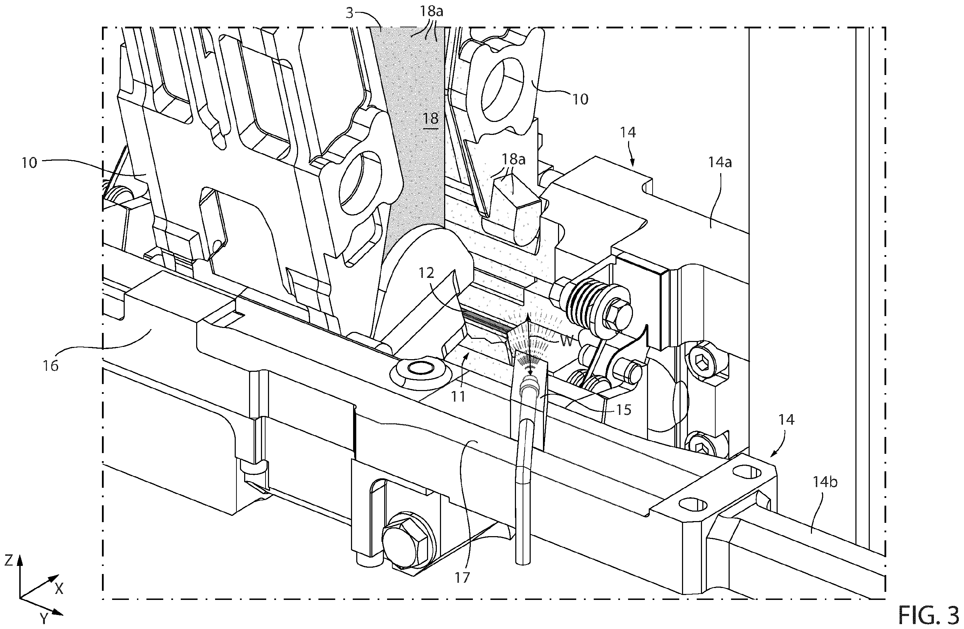

This configuration is particularly visible in Figure 3.

In particular, apparatus 8 comprises two dispensing devices, i.e. nozzles 15, each one associated with one pair of arms 14.

In particular, second arm 14b of each pair of arms 14 carries one respective nozzle 15, for spraying water towards the respective sealing member 12, which is carried by the relative first arm 14a facing such second arm 14b.

Thanks to the above configuration, the fluid can be fed towards each sealing member 12 in a more precise manner, thereby obtaining a more effective localized cooling with respect to the case in which water is fed from above by a duct arranged in a fixed position with respect to tube 3 and to sealing members 12, by which the water laps sealing members 12 only by gravity.

In addition, the advantageous configuration of nozzle 15 allows for a more efficient lubrication of sealing member 12.

Preferably, each nozzle 15 is fluidly connected to a source of cooling and/or lubricating fluid, known per se and not shown, e.g. a water reservoir.

According to an alternative embodiment not shown, packaging assembly 1, and particularly apparatus 8, comprises one nozzle 15 for each arm 14, that is, each one of first arm 14a and second arm 14b, for each pair of arms 14, carries one nozzle 15.

In this way, the efficiency of the cooling and/or the lubrication of sealing device 11 is further improved.

As visible in Figures 2 and 3, each one of first arm 14a and second arm 14b comprises:
- a first portion 16, which is configured to face tube 3, or axis A, and to which sealing member 12 or countersealing member 13 is mounted, respectively; and
- a second portion 17 adjacent to first portion 16 along a direction parallel to the arm 14 itself, in particular along third direction Y.

In detail, each first portion 16 carries one forming shell 10 and one of sealing member 12 and countersealing member 13.

Accordingly, first portion 16 of first arm 14a faces first portion 16 of second arm 14b.

Advantageously, nozzle 15 is mounted on second portion 17 of second arm 14b, for spraying the fluid towards first portion 16 of first arm 14a without interposition of tube 3. In other words, tube 3 does not hinder the flow of fluid towards first portion 16 of first arm 14a, i.e. towards sealing member 12.

In practice, nozzle 15 is positioned so that, in use, the sprayed fluid bypasses or avoids tube 3.

More precisely, nozzle 15 is positioned for directing the fluid towards sealing member 12 along a fourth direction W inclined with respect to second direction X.

In particular, fourth direction W is inclined with respect to both second direction X and third direction Y. More in particular, fourth direction W is also inclined with respect to first direction Z.

In this manner, nozzle 15 can spray the fluid directly towards sealing member 12 without interposition of tube 3, which is arranged between first portions 16, relatively to second direction X.

Preferably, nozzle 15 is configured to spray the fluid towards sealing member 12 when sealing member 12 is spaced apart from countersealing member 13.

In particular, nozzle 15 is configured to spray the fluid as soon as the sealing operation is completed and sealing member 12 and countersealing member 13 are moved away from one another along second direction X, and while arms 14 start to move upwards along first direction Z.

In this way, sealing member 12 can be cooled immediately after the end of sealing cycle, thereby avoiding overheating thereof during the next sealing cycle.

Alternatively, nozzle 15 is configured to spray the fluid during the jaw-like cooperation between sealing member 12 and countersealing member 13.

In this case, nozzle 15 sprays the fluid during the downward movement of arms 14 along first direction Z.

In this way, sealing member 12 can be cooled during all along the sealing cycle, thereby avoiding overheating thereof during the sealing operation and avoiding a sticking of the inductor or sonotrode to the plastic material.

In one embodiment, nozzle 15 is configured to spray the fluid in a continuous manner during the sealing operation.

In this way, overheating of the inductor or sonotrode is even more prevented.

It is further known in the field that forming shells 10 produce a certain friction while cooperating with tube 3, due to their cyclical movement to and from tube 3. Therefore, there is a need for lubricating forming shells 10.

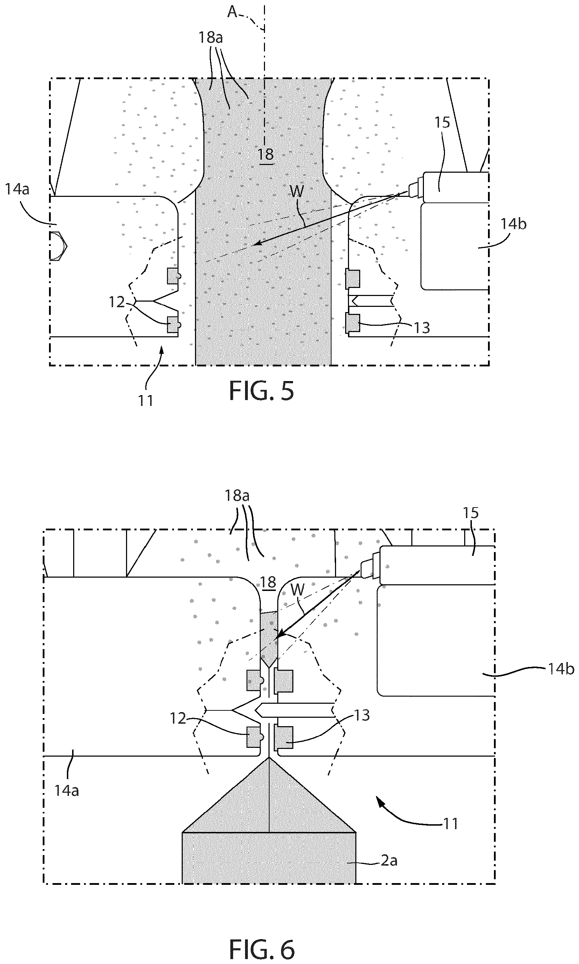

To this end, nozzle 15 according to the invention is advantageously configured to nebulize the fluid for creating a cloud 18 of nebulized fluid (visible in Figures 3, 4 and in particular in Figures 5 and 6).

In particular, nozzle 15 is configured to nebulize the fluid so that cloud 18 surrounds and laps forming shells 10.

More precisely, by means of the aforementioned nebulization, nozzle 15 is configured to produce a plurality of droplets 18a which, during operation, remain in suspension around tube 3, thereby lapping tube 3 and forming shells 10.

More specifically, due to the aforementioned reciprocating movement of arms 14, and due to the movement of arms 14 towards and away from one another, nozzle 15 is configured to create a cloud 18 which occupies an axially elongated region around tube 3.

Due to these movements, forming shells 10, along with sealing member 12 and countersealing member 13, are constantly immersed in such cloud 18.

This configuration is particularly effective in case nozzle 15 nebulizes the fluid in a continuous manner during the operation.

Thanks to the above configuration, forming shells 10 can be efficiently and effectively lubricated, despite the fact that nozzle 15 sprays the fluid directly towards sealing member 12.

Advantageously, nozzle 15 is made of a metallic material. In this way, the risk of clogging of the nozzle fluid passage due to limestone is reduced.

The operation of packaging assembly 1 is described hereinafter with reference to a single pair of arms 14 and starting from a condition in which arms 14 are moving downward along first direction Z to match the advancing speed of tube 3.

In this condition, forming shells 10 start to move towards one another, as well as sealing member 12 and countersealing member 13.

Sealing member 12 and countersealing member 13 grip tube 3 thereby sealing tube 3 and creating a transversal sealing band along third direction Y.

Soon after, forming shells 10 surround tube 3 imparting the desired external shape thereon.

Once forming and sealing is finished, forming shells 10 are moved away from one another, as well as sealing member 12 and countersealing member 13.

According to the invention, nozzle 15 sprays, in particular nebulizes, water towards sealing member 12 during the operation.

The operation is repeated identically for the other pair of arms 14 of apparatus 8.

The advantages of packaging assembly 1 according to the present invention will be clear from the foregoing description.

In particular, thanks to the above configuration, the fluid can be fed towards each sealing member 12 in a more precise manner, thereby obtaining a more effective and localized cooling with respect to the case in which water is fed from above by a duct.

Moreover, since the dispensing device is defined by a nozzle 15 which sprays the water, and does not simply flush it on tube 3, the Applicant has observed that the fluid (water) consumption is reduced.

Incidentally, the above results also in a further improvement in the structural quality of the finished package 2, since less water determines a decrease in the risk of soaking (by absorption) the paper material of the base layer, thereby reducing unwanted deformations of package 2.

Finally, thanks to the aforementioned nebulization, lubrication of forming shells 10, and in general of the entire operative zone of apparatus 8, can be ensured, despite the fact that nozzle 15 sprays the fluid directly towards sealing member 12.

Hence, the lifespan of forming shells 10 can be also increased, as well as the structural quality of the packaging material, due to the reduced friction.

Clearly, changes may be made to packaging assembly 1 as described herein without, however, departing from the scope of protection as defined in the accompanying claims.

## Claims

1. A packaging assembly (1) for forming and sealing a plurality of packages (2) containing a pourable product starting from a tube (3) of packaging material,
the packaging assembly (1) comprising:
- a longitudinal axis (A) along which the tube (3) is fed, in use;
- a sealing device (11) for repeatedly sealing the tube (3) at successive cross-sections thereof and having a sealing member (12) and a countersealing member (13) arranged at opposite sides of the longitudinal axis (A);
- at least a pair of arms (14) arranged at opposite sides of the longitudinal axis (A), movable towards and away from one another along a first direction (X) transversal to the longitudinal axis (A), and including a first arm (14a) carrying the sealing member (12) and a second arm (14b) carrying the countersealing member (13) ;
the sealing member (12) and the countersealing member (13) being configured to cyclically cooperate with one another in a jaw-like manner for sealing the tube;
wherein the packaging assembly (1) further comprises a dispensing device (15) for feeding a cooling and/or lubricant fluid at least towards the sealing member (12);
and wherein the dispensing device (15) is carried by the second arm (14b).

2. Packaging assembly as claimed in claim 1, wherein the dispensing device (15) is fixedly mounted on the second arm (14b).

3. Packaging assembly as claimed in claim 1 or 2, wherein the dispensing device (15) is integral in motion with the second arm (14b).

4. Packaging assembly as claimed in any one of the foregoing claims, wherein the first arm (14a) and the second arm (14b) are further movable in a reciprocate manner along a second direction (Z) parallel to the longitudinal axis (A);
and wherein the dispensing device (15) is integral with the reciprocating movement.

5. Packaging assembly as claimed in any of the foregoing claims, wherein the dispensing device comprises a nozzle (15) for spraying the fluid towards the sealing member (12).

6. Packaging assembly as claimed in claim 5, wherein the nozzle (15) is carried by the second arm (14b) for spraying the fluid towards the first arm (14a) along a direction (W) transversal to the longitudinal axis (A).

7. Packaging assembly as claimed in claim 6, wherein each one of the first arm (14a) and second arm (14b) comprises:
- a first portion (16), which is configured to face the tube (3) and to which the sealing member (12) or countersealing member (13) is mounted, respectively; and
- a second portion (17) adjacent to the first portion (16) along a third direction (Y) parallel to the arm itself and transversal to the first direction (X);
and wherein the nozzle (15) is mounted on the second portion (17) of the second arm (14b) for spraying the fluid towards the first portion (16) of the first arm (14a) without interposition of the tube (3), thereby bypassing or avoiding the tube (3).

8. Packaging assembly as claimed in claim 7, wherein the sealing member (12) and the countersealing member (13) are movable towards and away from one another along the first direction (X), the first direction (X) being perpendicular to the longitudinal axis (A);
and wherein the nozzle (15) is positioned on the second portion (17) for directing the fluid towards the sealing member (12) along a direction (W) inclined with respect to the first direction (X) and the third direction (Y).

9. Packaging assembly as claimed in any one of claims 5 to 8, wherein the nozzle (15) is configured to spray the fluid towards the sealing member (12) when the sealing member (12) is spaced from the countersealing member (13).

10. Packaging assembly as claimed in any one of claims 5 to 8, wherein the nozzle (15) is configured to spray the fluid when the sealing member (12) and the countersealing member (13) cooperate with one another in the jaw-like manner.

11. Packaging assembly as claimed in any one of claims 5 to 8, wherein the nozzle (15) is configured to spray the fluid in a continuous manner.

12. Packaging assembly as claimed in any one of claims 5 to 8, wherein the nozzle (15) is configured to nebulize the fluid for creating a cloud (18) of nebulized fluid.

13. Packaging assembly as claimed in claim 12, and comprising a forming device for shaping successive portion of the tube (3), the forming device having a pair of forming shells (10) arranged at opposite sides of the longitudinal axis (A), the first arm (14a) carrying one forming shell (10) and the second arm (14b) carrying the other forming shell (10), so that the forming shells (10) are movable towards and away from one another for repeatedly cooperating in contact with the tube (3);
wherein the nozzle (15) is configured to nebulize the fluid so that the cloud (18) surrounds and laps the forming shells (10).

14. Packaging assembly as claimed in any one of the foregoing claims, and further comprising a further dispensing device for feeding the cooling and/or lubricant fluid at least towards the countersealing member (13);
and wherein the further dispensing device is carried by the first arm (14a).

15. Packaging assembly as claimed in any one of the foregoing claims, wherein the dispensing device comprises a nozzle (15) made of metallic material.
